# EUROPÄISCHE PATENTSCHRIFT

(11) **EP 1 167 302 B1**
(45) Veröffentlichungstag und Bekanntmachung des Hinweises auf die Patenterteilung: **02.01.2003**
(21) Anmeldenummer: 00113331.3
(22) Anmeldetag: 23.06.2000
(51) Int. Cl.: C02F 3/12

(54) **Verfahren zur biologischen und physikalischen Elimination unerwünschter Wasserinhaltsstoffe aus Wasser**
Process for biological and physical elimination of undesired substances from water
Procédé pour l'élimination biologique et physique de substances indésirées de l'eau

(43) Veröffentlichungstag der Anmeldung: 02.01.2002
(73) Patentinhaber: Nassar Delphin Group Ltd., Jersey JE4 8SD, Channel Islands (GB)
(72) Erfinder: Nassar, Jacques, Bickfaya (LB); Brinke-Seiferth, Stephan, Dr. Ing., 20257 Hamburg (DE)
(74) Vertreter: Fleck, Thomas, Dr. Dipl.-Chem.

(56) Entgegenhaltungen:
- EP-A- 0 931 582
- DE-C- 19 918 221
- US-A- 5 972 216
- "ABWASSERREINIGUNG NACH KOMBIVERFAHREN" BETRIEBSTECHNIK AKTUELL,DE,VOGEL VERLAG GMBH, WURZBURG, Bd. 39, Nr. 11, 4. November 1998 (1998-11-04), Seite 42 XP000792701 ISSN: 1434-8071

## Beschreibung

Die Erfindung betrifft ein Verfahren zur biologischen und physikalischen Elimination unerwünschter Wasserinhaltsstoffe aus Wasser nach dem Oberbegriff des Anspruch 1.

Kleinkläranlagen sind eine etablierte und seit langer Zeit bekannte Technik. Nach DIN 4261 werden Kleinkläranlagen in solche ohne Abwasserbelüftung (DIN 4261 Teil 1) und solche mit Abwasserbelüftung (DIN 4261 Teil 2) eingeteilt. Letztere werden in verschiedene Verfahren unterteilt. Dem Stand der Technik entsprechen solche, die nach einer Absetzstufe, die dem Absetzen grober Stoffe dient (Vorklärung), eine biologische Stufe aufweisen. Durch die Versorgung mit Sauerstoff werden die Abwasserinhaltsstoffe von heterotrophen, aeroben Mikroorganismen umgesetzt und aus der Wasserphase entfernt. Die heterotrophen, aeroben Mikroorganismen nutzen die Inhaltsstoffe zum Wachstum und der überschüssige Mikroorganismen-Schlamm wird durch eine der biologischen Stufe nachgeschalteten Absetzstufe (Nachklärung) von dem gereinigten Wasser getrennt. Diese Trennung findet durch statisches Absetzen der Mikroorganismen statt. Ein Teil der Mikroorganismen verbleibt jedoch in Schwebe und wird dem Ablauf der Kläranlage zugeführt. Insofern beinhaltet der Ablauf eine für die Wiederverwendung nicht tolerierbare Anzahl von Mikroorganismen.

Die EP-A-0 931 582 beschreibt ein Verfahren zur Behandlung von Wasser mittels eines Tanks. Der Begriff Kleinkläranlage wird in dem Dokument nicht verwendet. Eine Kleinkläranlage ist begriffsmäßig durch die DIN 4045 definiert und beschreibt eine "Anlage zur Behandlung häuslichen Schmutzabwassers mit begrenzten Anschlußwert gemäß DIN 4261 Teil 1 bis Teil 4".

Das Dokument beschreibt die Verwendung einer Mikrofiltration zur Reinigung von Wasser aus einem Tank. In diesem Tank werden durch Mannlöcher die Mikrofiltrationseinheiten eingebracht. Der Tank weist keine Absetzstufe zur physikalischen Vorbehandlung, keine Stufe zur biologischen Behandlung und keine Absetzeinheit zur Abtrennung des biologischen Schlammes auf. Zudem ist unter der Mikrofiltration eine Belüftungseinrichtung installiert (Spalte 12 Zeile 22-24 und Zeile 48-49).

Das Dokument beschreibt femer ein Verfahren zur Behandlung von Wasser ("purification tank"), das lediglich Schwebstoffe und Keime aus dem Wasser entfernt. Diese Verfahren sind bekannt und entsprechend Stand der Technik.

Der Erfindung liegt die Aufgabe zugrunde, den Ablauf einer biologischen Kleinkläranlage soweit aufzubereiten, dass der Ablauf wiederverwendet werden kann und den EU Richtlinien entspricht. Diese Aufgabe wird erfindungsgemäß dadurch gelöst, dass in die Wasserphase der nachgeschalteten Absetzeinheit ein Filtergerät installiert wird, das mit Membranen bestückt ist, die eine Porenweite aufweisen, die kleiner ist als Bakterien. Dieser der Filtereinheit abfließende Strom wird in einen in der Kleinkläranlage integrierten Tank gespeichert und kann wiederverwendet werden. Die Filtereinheit wird im Unterdruck betrieben. Das bedeutet, dass der Permeatstrom gepumpt wird und durch die Hohlfasermodule gesogen wird.

Das erfindungsgemäße Verfahren ist für eine Anwendung bei einem Abwasseranfall von 4 Einwohner bis 50 Einwohnern geeignet, nämlich zur biologischen Reinigung und keim- und feststofffreien Aufbereitung der anfallenden Abwässer. Zum besseren Verständnis sind 5 Zeichnungen beigelegt:
- **Fig. 1:**: Darstellung der Draufsicht der Kleinkläranlage für 4-8 Einwohner, bestehend aus einem Behälter mit fünf Kammern.

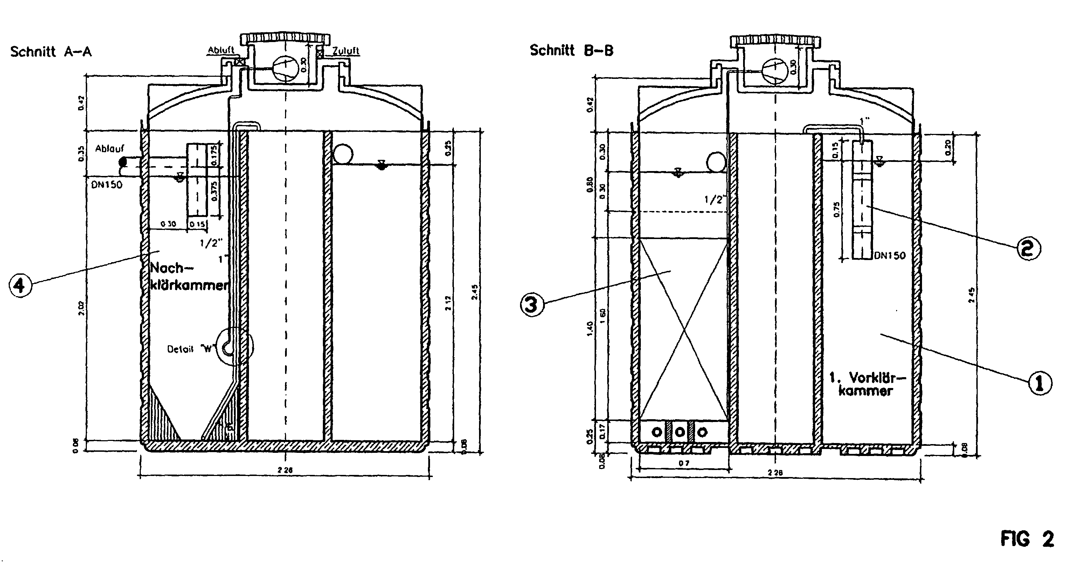

- **Fig. 2:**: Darstellung der in Fig.1 angegebenen Schnitte der Kleinkläranlage für 4-8 Einwohner.

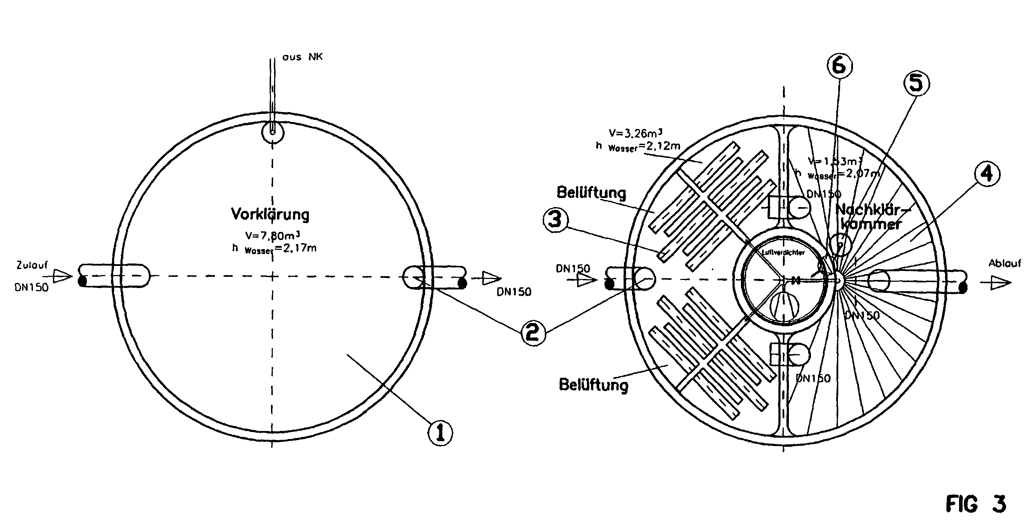

- **Fig. 3:**: Darstellung der Draufsicht der Kleinkläranlage für 9-19 Einwohner, bestehend aus einem Behälter mit einer Kammer und einem zweiten Behälter mit zwei Kammern.

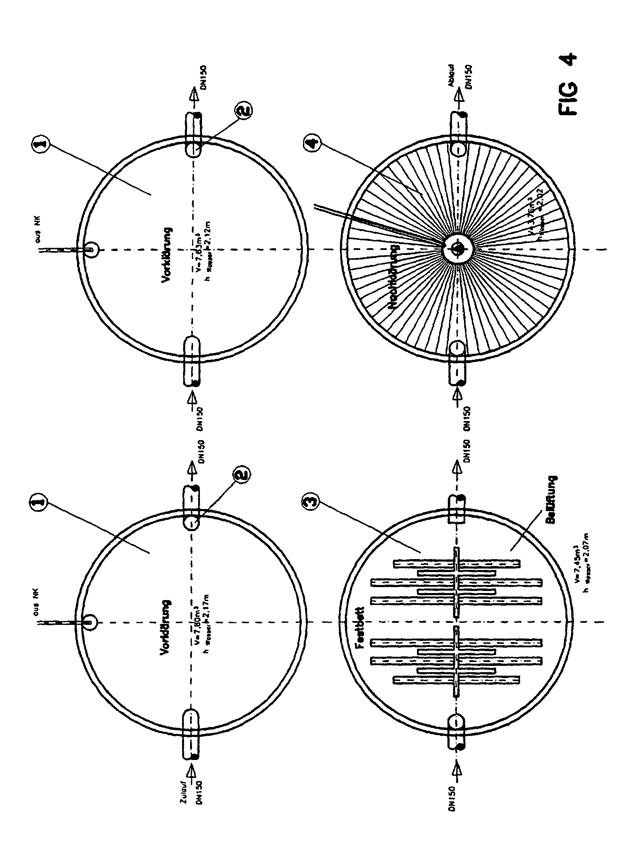

- **Fig. 4:**: Darstellung der Draufsicht der Kleinkläranlage für 20-44 Einwohner, bestehend aus vier Behältern mit jeweils einer Kammer.

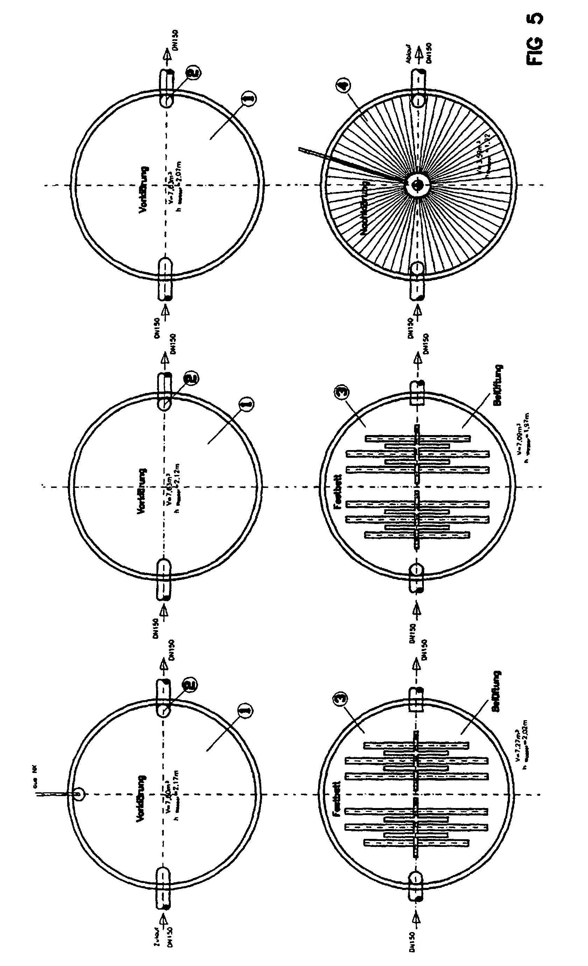

- **Fig. 5:**: Darstellung der Draufsicht der Kleinkläranlage für 44-50 Einwohner, bestehend aus sechs Behältern mit jeweils einer Kammer.

### Beispiel

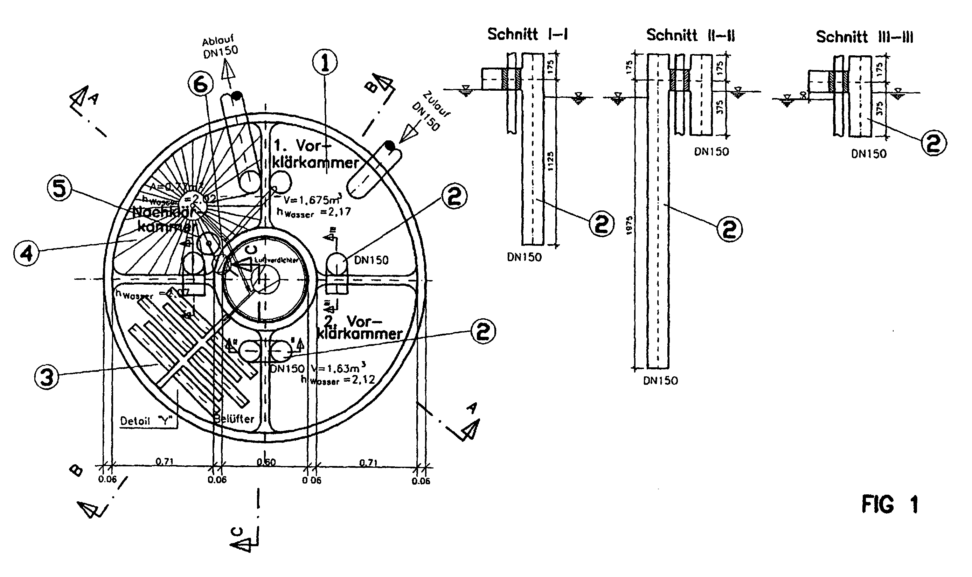

Als Beispiel wird eine Kleinkläranlage für 4 Einwohner eines Einfamilienhauses gewählt. Die Größe der Anlage ist in **Fig.1** schematisch dargestellt. Die Anlage besteht aus einem runden Behälter mit einem dazugehörigen Deckel. Die Teile sind aus Kunststoff in sogenannter Sandwich-Bauweise hergestellt, wobei der Schichtenaufbau aus zwei Lagen Polyethylen, die eine Lage Polyurethan einschließt, besteht.

Die zu reinigende Wassermenge der 4 Einwohner beträgt in der Regel 600 Liter pro Tag. Dieser Wasserstrom fließt der Kläranlage zu. In den ersten sogenannten Vorklärkammem (1) der Anlage werden die Feststoffe von der Flüssigphase getrennt, indem das Wasser eine Mindestaufenthaltszeit verbringt, damit sich die schweren Stoffe ablagern können. Das Überfließen von Schwimmstoffen zur nächsten Kammer wird durch installierte Tauchrohre (2) verhindert.

Der Vorklärkammer ist die Kammer (3) nachgeschaltet, in der die biologische Reaktion stattfindet. Ziel dieser biologischen Reinigungsstufe ist die Verringerung des Eutrophierungspotentials der im Abwasser vorhandenen Stoffe. Dies geschieht durch installierte Aufwuchskörper, die aeroben Mikroorganismen die Möglichkeit bieten dort zu siedeln. Diese Mikroorganismen bilden den sogenannten Biofilm, der mit Hilfe von im Wasser gelösten Sauerstoff die gelösten organischen Verbindungen zu Kohlendioxid veratmen. Zudem wird Ammonium zu Nitrat umgewandelt. Zum Eintrag von gelösten Sauerstoffs wird das Wasser dieser Kammer mit Luft begast. Durch die Begasung wird zudem Strömung erzeugt, die einen guten Kontakt der gelösten organischen Stoffe mit dem Biofilm gewährleistet. Die Mikroorganismen wachsen mit dem Konsum der Nährstoffe und lösen sich als überschüssige Biomasse von den Aufwuchskörpern ab.

Das Wasser gelangt von der biologischen Reinigungsstufe in die sogenannte Nachklärkammer (4). Diese Stufe dient der Trennung des biologisch gereinigten Wassers von der überschüssigen Biomasse. Die Kammer ist am Fuß mit einer Schräge ausgestattet, in der sich die überschüssige Biomasse sammelt und von dort in die erste Kammer transportiert wird. Ein Teil der überschüssigen Biomasse setzt sich jedoch nicht ab und würde mit dem biologisch gereinigten Wasser dem Vorfluter (Graben oder Bach) zugeführt oder durch ein Drainagesystem versickert werden.

Die Möglichkeit der Verwendung dieser Wässer zur Bewässerung des Gartens oder die Zuführung des Wassers zur Verwendung als Spülwasser des Sanitärsystems wird durch den in der Nachklärkammer installierten Filter (5) ermöglicht. Durch eine im Unterdruck auf der Permeatseite des Filters installierte Pumpe (6) wird das Wasser in eine Vorlagekammer gepumpt, die ein Volumen aufweist, das dem Tagesbedarf von 4 Einwohnern an Wasser entspricht. Dieses Wasser ist aufgrund der geringen Porengröße des Filtermaterials soweit physikalisch gereinigt, dass es keine Schwebstoffe und quasi keine Bakterien mehr aufweist. Das Wasser entspricht den Vorschriften der EU Badegewässerverordnung und kann problemlos zur Bewässerung des Gartens oder zur Verwendung im Sanitärsystem des Hauses verwand werden.

## Patentansprüche

1. Verfahren zur biologischen und physikalischen Elimination unerwünschter Wasserinhaltsstoffe aus Wasser mittels einer Kleinkläranlage für die Klärung von Abwässern von 4-50 Einwohnern, die ein Gesamtvolumen von 8 bis 50 m³ besitzt und aus **einem** bis sechs strömungstechnisch miteinander verbundenen Behältern besteht, die jeweils eine bis 5 Kammern aufweisen, die strömungstechnisch miteinander verbunden sind, **dadurch gekennzeichnet, daß** das physikalisch und biologisch gereinigte Wasser **durch Unterdruck** von 0,2 bis 0,7 bar an der Permeatseite eines Filters, der in der der biologischen Stufe nachgeschalteten Absetzeinheit installiert ist, und mit Hohlfasermembranen aus Kunststoff *in* einer Anzahl von 50 bis 5000 und einer Porengröße von 0,01 µm bis 1 µm bestückt ist, **durch diesen gepumpt** wird und einem in der biologischen und physikalischen Kleinkläranlage integrierten Speichertank zur Wiederverwendung *zugeführt wird.*

2. Verfahren nach Anspruch 1, **dadurch gekennzeichnet, daß** die Hohlfasermembranen aus Polypropylen oder Polyethersulfon bestehen.

## Claims

1. Process for the biological and physical elimination of undesirable water components from water by means of a small sewage treatment plant. The latter is intended for the purification of the wastewater of 4 to 50 residents, has a total volume of between 8 and 50 m³, consists of 1 to 6 containers each with 1 to 5 chambers connected fluidically, shown by the fact that the physically and biologically purified water is pumped through a filter by means of negative pressure measuring 0.2 to 0.7 bar at the permeate side of a filter which is installed in the settling unit subsequent to the biological stage and equipped with 50 to 5000 hollow fiber membranes made of plastic material with a pore size of 0.01 µm to 1 µm led to a storage tank integrated in the biological and physical small sewage treatment plant for recycling purposes.

2. Process according to claim 1, shown by the fact that the hollow fiber membranes are comprised of polypropylene or polyethersulfone.

## Revendications

1. Procédé pour l'élimination biologique et physique de substances indésirées contenues dans l'eau grâce à une installation compacte destinée à la clarification des eaux d'égout de 4 à 50 habitants, qui représente un volume total de 8 à 50 m³ et se compose d'un à six conteneurs reliés entre eux par des moyens se rapportant à la technique d'écoulement, lesquels conteneurs présentent respectivement une à cinq chambres qui sont reliées entre elles par des moyens se rapportant à la technique d'écoulement, **caractérisé en ce que** l'eau épurée physiquement et biologiquement par une dépression de 0,2 à 0,7 bar sur le côté du perméat d'un filtre qui est installé dans l'unité de décantation en aval de l'étape biologique et doté d'une membrane en fibres creuses à base de plastique en une quantité de 50 à 5000 et d'une taille de pores de 0,01 µm à 1 µm, est pompée par ce dernier et est acheminée dans un réservoir de stockage intégré dans l'installation compacte biologique et physique en vue de sa réutilisation.

2. Procédé selon la revendication 1, **caractérisé en ce que** les membranes en fibres creuses se composent de polypropylène ou de polyéthersulfone.
